# EUROPEAN PATENT SPECIFICATION

(11) **EP 3 219 820 B1**
(45) Date of publication and mention of the grant of the patent: **19.08.2020**
(21) Application number: 15859180.0
(22) Date of filing: 09.11.2015
(51) Int. Cl.: C22C 38/00, B23K 20/04, C21D 9/00, C22C 38/14, C22C 38/58, C21D 9/46, C22C 19/03, C22C 38/02, C22C 38/04, C22C 38/06, C22C 38/12, B32B 15/01, B21B 1/38, C21D 8/02, C22C 19/00

(54) **NICKEL-BASE ALLOY-CLAD STEEL PLATE AND METHOD FOR PRODUCING THE SAME**
NICKELBASISLEGIERTES STAHLBLECH UND VERFAHREN ZUR HERSTELLUNG DAVON
TÔLE D'ACIER À BASE D'ALLIAGE À BASE DE NICKEL ET SON PROCÉDÉ DE FABRICATION

(30) Priority: 11.11.2014 JP 2014228675
(43) Date of publication of application: 20.09.2017
(73) Proprietor: JFE Steel Corporation, Tokyo 100-0011 (JP)
(72) Inventor: YOKOTA, Tomoyuki, Tokyo 100-0011 (JP); TACHIBANA, Shunichi, Tokyo 100-0011 (JP); KURONUMA, Yota, Tokyo 100-0011 (JP); SUEYOSHI, Hitoshi, Tokyo 100-0011 (JP)
(74) Representative: Haseltine Lake Kempner LLP
(86) International application number: PCT/JP2015/005593
(87) International publication number: WO 2016/075925

(56) References cited:
- JP-A- H0 711 331
- JP-A- H02 217 418
- JP-A- H04 182 080
- JP-A- H05 245 657
- JP-A- H05 245 657
- JP-A- H05 255 744
- JP-A- 2006 328 460
- JP-A- 2014 101 568
- JP-A- 2014 101 568
- JP-A- 2015 086 422
- JP-A- 2015 086 422
- JP-B2- 2 510 783

## Description

### Technical Field

The present invention relates to a nickel-base alloy-clad steel plate including a cladding metal composed of a nickel-base alloy having excellent corrosion resistance, such as Alloy825 or Alloy625, and a base metal composed of a carbon steel or a low-alloy steel which has an excellent DWTT (drop weight tear test) property (i.e., property of stopping the propagation of brittle fracture which is evaluated by a DWTT) and a method for producing the nickel-base alloy-clad steel plate.

### Background Art

A clad steel plate is a steel plate formed by joining a cladding metal composed of a stainless steel or a nickel-base alloy to a base metal composed of a low-alloy steel or the like. A clad steel plate is formed by metallurgically joining different types of metals to each other, which are not likely to be detached from each other although a plating film may detach from a base metal. A clad steel plate may have a novel property that cannot be achieved by a single type of a metal or an alloy.

A clad steel plate may have properties comparable to those of a solid metal (i.e., a metal having a microstructure similar to that of a cladding metal throughout the entire thickness) when the clad steel plate includes a cladding metal having properties suitable for a purpose depending on the operating environment. Using a carbon steel or a low-alloy steel having a high toughness and a high strength, which is suitable for a severe environment, as a base metal constituting a clad steel plate enables the production of a clad steel plate having a high toughness and a high strength.

As described above, a clad steel plate contains a smaller amount of alloy elements than a solid metal but achieves corrosion resistance comparable to that of a solid metal. Furthermore, a clad steel plate has strength and toughness comparable to those of a carbon steel and a low-alloy steel. Thus, a clad steel plate advantageously achieves both economy and functionality.

For the above reasons, clad steels including a cladding metal composed of a stainless steel or a nickel-base alloy have been considered to be advantageous functional steel materials, and there have been growing needs for clad steels in various industrial fields.

Typical examples of a cladding metal included in a nickel-base alloy-clad steel plate, which is an example of clad steel plates, include Alloy825 and Alloy625. Nickel-base alloy-clad steel plates, which have excellent corrosion resistance, are preferably used as a material of pipelines.

The development of energy resources has been conducted even in "difficult-to-mine environment" regions. In such an environment, the base metal is required to have further high low-temperature toughness and, specifically, an excellent property of stopping the propagation of brittle fracture, and the cladding metal is required to have further excellent corrosion resistance.

However, in particular, nickel-base alloys such as Alloy625 disadvantageously have high deformation resistance in hot working, and the bonding property between the nickel-base alloy and the base metal deteriorates than that between a common stainless steel and the base metal. One of the methods for addressing the above issue is to perform clad rolling in a further high temperature range. On the other hand, in order to achieve a good DWTT property, a fine microstructure needs to be formed by reducing, to a minimum level, the temperature at which clad rolling is finished. Thus, enhancing the bonding property and enhancing the DWTT property are mutually contradictory.

Among nickel-base alloys, for example, Alloy625 causes carbides and intermetallic compounds to be precipitated depending on the thermal hysteresis in the production of the clad steel plate. Examples of the precipitated carbides include MC, M₆C, and M₂₃C₆ (where M represents a metal element). Examples of the precipitated intermetallic compounds include the Laves phase, the δ phase, and the γ'' phase. Among the above precipitates, MC is primarily NbC. The precipitation of MC does not significantly affect corrosion resistance. Since the precipitation of the intermetallic compounds in Alloy625 occurs at a timing later than the precipitation of the carbides, it is not likely to degrade corrosion resistance. Therefore, M₆C and M₂₃C₆ deteriorate the corrosion resistance of Alloy625. The noses of the precipitation curves of M₆C and M₂₃C₆ are present in the range of 700°C to 900°C. M₆C and M₂₃C₆ contain Cr, Mo, and Ni that are anticorrosive elements and precipitate along the grain boundaries. This may induce sensitization. In a solid metal, commonly, the precipitates can be dissolved by performing a solution treatment subsequent to rolling. On the other hand, heating and holding a clad steel plate at a high temperature at which the precipitates are dissolved in the clad steel plate causes coarsening of crystal grains of the low-alloy steel, that is, the base metal, and significantly deteriorates mechanical properties.

In the above context, the following clad steel plates and methods for producing a clad steel plate have been disclosed.

Patent Literature 1 and Patent Literature 2 disclose clad steel produced by quenching and tempering, the clad steel including a base metal having high strength and high low-temperature toughness, and a method for producing the clad steel. However, as described above, holding clad steel in the specific temperature range may deteriorate the corrosion resistance of the clad steel. Accordingly, it is preferable not to perform quenching or tempering in order to achieve high corrosion resistance. Moreover, it is not possible to improve low-temperature toughness and, in particular, a property of stopping the propagation of brittle fracture to a sufficient degree by the production method including quenching and tempering.

Accordingly, it is preferable to use TMCP (thermomechanical control process) in order to improve the corrosion resistance of the cladding metal and the low-temperature toughness of the base metal.

A method for producing a clad steel plate by TMCP which includes a cladding metal composed of a stainless steel or a nickel-base alloy is described in Patent Literature 3. In the production method, a low-alloy steel containing Nb: 0.08% to 0.15% by mass is used as a base metal, the rolling reduction ratio achieved at 1000°C or lower is set to 3 or more, and the rolling finish temperature is set to 900°C to 1000°C.

Another method for producing a clad steel plate which includes a cladding metal composed of a stainless steel or a nickel alloy by TMCP is described in Patent Literature 4. In the production method, a low-alloy steel that contains Nb: 0.08% by mass or more as in Patent Literature 3 and, in order to improve the sour resistance (i.e., resistance to hydrogen induced cracking and sulfide stress corrosion cracking), S: 0.001% by mass or less and is treated by the addition of Ca is used as a base metal, the total rolling reduction ratio is set to 5 or more, and the rolling finish temperature is set to 850°C to 1000°C.

In Patent Literature 3 and Patent Literature 4, attention is focused on the fact that Nb extends the non-recrystallization temperature range of austenite to a considerably high-temperature range and a large amount of Nb is used such that a good DWTT property can be achieved due to the controlled rolling effect (effect of forming a fine microstructure) even when the finishing temperature of clad rolling is higher. That is, in the above methods, all of the DWTT property, the bonding property, and corrosion resistance are achieved by taking full advantage of TMCP. However, when such a large amount of Nb is used, the conditions of the Nb carbonitrides dissolved may significantly vary with the heating temperature and rolling conditions of base-metal rolling or clad rolling. This may disadvantageously cause the strength and DWTT property of the clad steel plate to be significantly changed. PTL 5 and PTL 6 include clad steel plates wherein the base metal rolling temperature is not controlled and therefore the conditions of the Nb carbonitrides dissolved may significantly vary.

### Citation List

### Patent Literature

PTL 1: Japanese Unexamined Patent Application Publication No. 2006-328460
PTL 2: Japanese Unexamined Patent Application Publication No. 2004-149821
PTL 3: Japanese Unexamined Patent Application Publication No. 5-261567
PTL 4: Japanese Unexamined Patent Application Publication No. 7-246481
PTL 5: Japanese Publication No. H05 245657 A
PTL 6: Japanese Publication No. 2015 086422 A

### Summary of Invention

### Technical Problem

The present invention was made in order to address the above-described issues. An object of the present invention is to provide a nickel-base alloy-clad steel plate that is a clad steel plate including a cladding metal composed of a nickel-base alloy such as Alloy825 and Alloy625, the clad steel plate including a base metal containing a large amount of Nb, the base metal stably having a DWTT property (property of stopping the propagation of brittle fracture) of 85% or more in terms of shear fracture percentage at a test temperature of -25°C, the clad steel plate having excellent corrosion resistance and an excellent bonding property. Another object of the present invention is to provide a method for producing the nickel-base alloy-clad steel plate.

### Solution to Problem

In contrast to a solid nickel-base alloy and a solid low-alloy steel, a nickel-base alloy-clad steel plate is required to secure the following three properties simultaneously: the corrosion resistance of the cladding metal; mechanical properties of the base metal, such as a DWTT property; and the bonding property as a composite material. In the light of this, the inventors of the present invention studied the optimization of the rolling finish temperature of clad rolling in order to achieve high corrosion resistance of the cladding metal. The inventors also studied the optimization of the composition and the rolling conditions of the base metal and the heating temperature and the rolling conditions of the clad rolling in order to secure mechanical properties of the base metal and, in particular, the DWTT property of the base metal. The inventors also studied the optimization of the slab-heating temperature of clad rolling, the temperature range for hot rolling, the rolling reduction ratio achieved in the hot-rolling process, and the like in order to secure the bonding property. As a result of the above studies, the inventors found specific conditions under which all of the above properties can be achieved. In particular, the importance of the slab-heating temperature of base-metal rolling performed prior to clad rolling, which has not been focused on, was recognized in the present invention.

The present invention was made on the basis of the above findings. The summary of the present invention is as in claims 1 to 3.

### Advantageous Effects of Invention

According to the present invention, a nickel-base alloy-clad steel plate including a base metal that is composed of carbon steel or a low-alloy steel and contains Nb: 0.040% to 0.10% by mass stably achieves an excellent DWTT property of the base metal and has a good bonding property and high corrosion resistance.

### Description of Embodiments

Embodiments of the present invention are described below. The present invention is not limited by the following embodiments.

The ranges to which constituents are limited in the present invention are described below in detail. In the description of each element, all "%" refers to "% by mass" unless otherwise specified.

### <Base Metal>

The base metal contains, by mass, C: 0.020% to 0.10%, Si: 0.10% to 0.50%, Mn: 0.75% to 1.80%, P: 0.015% or less, S: 0.0030% or less, Nb: 0.040% to 0.10%, Ti: 0.005% to 0.030%, N: 0.0010% to 0.0060%, and Al: 0.070% or less.

### C: 0.020% to 0.10%

Carbon (C) is a constituent effective for securing the strength of steel. If the C content is less than 0.020%, steel having a sufficiently high strength which is commonly used for welding may fail to be produced. If the C content exceeds 0.10%, the toughness of the base metal and the toughness of the weld heat-affected zone of the base metal may be deteriorated. It is desirable to reduce the C content from the viewpoint of weldability. Accordingly, the upper limit of the C content is set to 0.10%. The C content is preferably 0.020% to 0.080% and is more preferably 0.030% to 0.080% from the viewpoints of weldability and the toughness of the HAZ.

### Si: 0.10% to 0.50%

Silicon (Si) is used for deoxidation in a steel-making process. Si is a constituent necessary for securing the strength of the base metal. Accordingly, the Si content needs to be 0.10% or more. However, if the Si content exceeds 0.50%, the toughness of the base metal and workability may be adversely affected. Thus, the Si content is set to 0.10% to 0.50%. The Si content is preferably 0.20% to 0.40% from the viewpoints of deoxidizing effect and toughness.

### Mn: 0.75% to 1.80%

Manganese (Mn) is a constituent effective for securing the strength and toughness of the base metal. The Mn content needs to be 0.75% or more in order to secure strength and toughness. However, if the Mn content exceeds 1.80%, toughness and weldability may be adversely affected. Accordingly, the Mn content is set to 0.75% to 1.80% and is preferably 1.00% to 1.70%.

### P: 0.015% or Less

It is desirable to reduce the phosphorus (P) content to a minimum level in order to secure the toughness of the base metal and the toughness of the weld heat-affected zone of the base metal. However, excessive dephosphorization increases the cost. Accordingly, the P content is set to 0.015% or less and is preferably 0.010% or less. Reducing the P content to an excessively low level increases the ingot cost and is economically disadvantageous. Thus, the lower limit of the P content is preferably about 0.001%.

### S: 0.0030% or Less

Sulfur (S) is an element that may be included in steel as an inevitable impurity even when not added to the steel. In the present invention, the S content is set to 0.0030% or less and is preferably 0.0010% or less in order to secure low-temperature toughness. Reducing the S content to an excessively low level increases the ingot cost and is economically disadvantageous. Thus, the lower limit of the S content is preferably about 0.0003%.

### Nb: 0.040% to 0.10%

Niobium (Nb) produces a pinning effect in the form of a precipitate and expands the non-recrystallization range in the form of solute Nb. This reduces the size of crystal grains. The above effect and action improve the strength, toughness, and DWTT property of the base metal. If the Nb content is less than 0.040%, the above effects may fail to be achieved with efficiency. If the Nb content exceeds 0.10%, the above effects may stop increasing. On the contrary, a coarse Nb inclusion may be formed, which deteriorates the DWTT property. Accordingly, the Nb content is set to 0.040% to 0.10% and is preferably 0.050% to 0.080%.

### Ti: 0.005% to 0.030%

Titanium (Ti) forms TiN, which suppresses the growth of crystal grains during heating of slabs and the growth of crystal grains in the weld heat-affected zone. This leads to the formation of a fine microstructure and improves the strength of the base metal, the toughness of the base metal, and the toughness of the weld heat-affected zone of the base metal. If the Ti content is less than 0.005%, the above effects may fail to be achieved to a sufficient degree. If the Ti content exceeds 0.030%, on the contrary, the above effects may fail to be achieved. Furthermore, the toughness of the base metal and the toughness of the weld heat-affected zone of the base metal may be deteriorated. Accordingly, the Ti content is set to 0.005% to 0.030% and is preferably 0.010% to 0.020%.

### N: 0.0010% to 0.0060%

Nitrogen (N) precipitates as TiN, which improves the toughness of the weld heat-affected zone. If the N content is less than 0.0010%, the above effect may be reduced. Accordingly, the lower limit of the N content is set to 0.0010%. However, if the N content exceeds 0.0060%, the amount of solute N may be increased, which deteriorates the toughness of the weld heat-affected zone. With consideration of the improvement of the toughness of the HAZ which results from the precipitation of fine TiN particles which is associated with the Ti content, the N content is set to 0.0010% to 0.0060% and is preferably 0.0020% to 0.0050%.

### Al: 0.070% or Less

Aluminium (Al) is an element important for deoxidation in a steel-making process and improves the toughness of the weld heat-affected zone. However, if the Al content exceeds 0.070%, improvement effect of the toughness of the weld heat-affected zone stops increasing. Accordingly, the Al content is set to 0.070% or less. The Al content is preferably 0.010% or more in order to obtain the improvement effect of the toughness of the weld heat-affected zone.

The base metal may further contain, in addition to the above constituents, one or more elements selected from, by mass, Cu: 0.50% or less, Ni: 0.50% or less, Cr: 0.50% or less, Mo: 0.50% or less, V: 0.1% or less, and Ca: 0.0010% to 0.0050%.

### Cu: 0.50% or Less

Copper (Cu) is one of the elements effective for improving toughness and increasing strength. However, if the Cu content exceeds 0.50%, weldability may be deteriorated. Accordingly, if the base metal contains Cu, the Cu content is set to 0.50% or less and is preferably 0.10% to 0.40%.

### Ni: 0.50% or Less

Nickel (Ni) is one of the elements effective for improving toughness and increasing strength. However, if the Ni content exceeds 0.50%, the above effects may stop increasing. Furthermore, adding Ni to the base metal increases the production cost. Accordingly, if the base metal contains Ni, the Ni content is set to 0.50% or less and is preferably 0.10% to 0.40%.

### Cr: 0.50% or Less

Chromium (Cr) is one of the elements effective for improving toughness and increasing strength. However, if the Cr content exceeds 0.50%, the toughness of the weld heat-affected zone may be deteriorated. Accordingly, if the base metal contains Cr, the Cr content is set to 0.50% or less and is preferably 0.05% to 0.35%.

### Mo: 0.50% or Less

Molybdenum (Mo) is an element that improves the strength of the base metal and stably improves the toughness of the base metal. However, if the Mo content exceeds 0.50%, the above effects may stop increasing. Moreover, adding an excessive amount of Mo to the base metal deteriorates the toughness of the weld heat-affected zone and weldability. Accordingly, if the base metal contains Mo, the Mo content is set to 0.50% or less. The Mo content is preferably 0.05% to 0.35% from the viewpoints of the strength and the toughness of the base metal.

### V: 0.10% or Less

Vanadium (V) is an element that improves the strength of the base metal. However, if the V content exceeds 0.10%, carbonitrides may be precipitated and deteriorate toughness. Accordingly, if the base metal contains V, the V content is set to 0.10% or less. The V content is preferably 0.02% to 0.05% from the viewpoints of the strength and the toughness of the base metal.

### Ca: 0.0010% to 0.0050%

Calcium (Ca) controls the form of sulfide-based inclusions and improves the toughness of the base metal and the toughness of the weld heat-affected zone of the base metal. For achieving the above effects, the Ca content needs to be set to 0.0010% or more. However, if the Ca content exceeds 0.0050%, the above effects may stop increasing and, on the contrary, cleanliness may be deteriorated. This deteriorates the toughness of the weld heat-affected zone. Accordingly, if the base metal contains Ca, the Ca content is set to 0.0010% to 0.0050% and is preferably 0.0020% to 0.0030%.

### Content of Precipitated Nb in Base Metal: 0.040% to 0.070%

Microstructure refinement is basically effective for improving the DWTT property of the base metal. It was confirmed that, when the base metal contains a particularly adequate amount of Nb precipitate in the slab stage, that is, the stage subsequent to base-metal rolling and prior to clad rolling, the content of precipitated Nb in the base metal included in a clad steel plate formed by clad rolling under the conditions described in the present invention is 0.040% to 0.070%. Specifically, when the content of precipitated Nb in the clad steel plate finally produced by base-metal rolling and clad rolling is 0.040% or more, the effect of pinning of heated austenite grains while heating is performed during clad rolling becomes large, so that the microstructure refinement is easily achieved. The term "precipitated Nb" used herein refers to Nb included in precipitates such as NbC and NbN and composite precipitates such as (NbTi) (CN). If the content of the precipitated Nb in the base metal exceeds 0.070%, the amount of coarse precipitates may be increased and the above effects may stop increasing or be reduced. Accordingly, the content of precipitated Nb in the base metal is preferably 0.040% to 0.070%. The content of precipitated Nb can be measured by the method described in Examples below.

### Microstructure of Base Metal: Average Grain Size of Bainite Microstructure Is 30 µm or Less

The formation of a fine microstructure can be achieved by using the effect of pinning of austenite grains which is produced by the precipitates, expanding the non-recrystallization range with the solute Nb, and performing rolling in the non-recrystallization range. The former approach is important for improving the DWTT property of the base metal. Specifically, the base metal has an excellent DWTT property when the average size of bainite grains included in the microstructure of the base metal is 30 µm or less. The average grain size of the bainite microstructure is determined by identifying each crystal grain as a single grain when the difference in crystallographic orientation measured by EBSD (electron back-scattering diffraction) is 15° or more and taking the area-weighted average of the sizes of the crystal grains.

The proportion of bainite in the microstructure of the base metal is preferably 90% or more by area. Examples of phases other than bainite which are included in the microstructure of the base metal include ferrite and martensite.

### <Cladding Metal>

The cladding metal is composed of a nickel-base alloy. The term "nickel-base alloy" used herein refers to an alloy primarily composed of Ni. Ni is a primary element of a high-nickel-base alloy and an element that improves corrosion resistance. In particular, Ni markedly improves stress-corrosion cracking resistance in a sour environment. Using Ni in combination with Cr and Mo further improves corrosion resistance. The Ni content in the cladding metal according to the present invention is preferably 38% or more. Examples of the constituents of the nickel-base alloy which are other than Ni include C, Si, Mn, P, S, Cr, Mo, Fe, Al, Ti, Nb, and Ta. Specific examples of the nickel-base alloy include Alloy825, Alloy625, and Monel.

### <Production Method>

A method for producing the nickel-base alloy-clad steel plate according to the present invention is described below. The treatments essential in the method for producing the nickel-base alloy-clad steel plate are base-metal rolling and clad rolling.

### Base-Metal Rolling

In base-metal rolling, the slab-heating temperature is set to 1000°C or higher and 1100°C or lower. If the slab-heating temperature of base-metal rolling exceeds 1100°C, (NbTi)(CN) may dissolve in the base metal. This reduces the effect of pinning of heated austenite grains while heating is performed during clad rolling and increases the size of initial austenite grains. As a result, a coarse bainite microstructure is formed after clad rolling, which deteriorates the DWTT property. Accordingly, the slab-heating temperature of base-metal rolling is set to 1100°C or lower. However, if the slab-heating temperature is lower than 1000°C, the rolling load is increased and the effect of controlling the size of austenite grains may be reduced. Accordingly, the slab-heating temperature is set to 1000°C or higher. The slab is rolled to a thickness of about 100 mm, which is the thickness required for a steel used in clad rolling, with a rolling finish temperature of 900°C or higher. The rolling finish temperature is preferably reduced to a minimum level from the viewpoint of microstructure refinement. However, reducing the rolling finish temperature to an excessively low level increases the thickness of the steel plate and the rolling load to an excessive level. Accordingly, the rolling finish temperature is preferably 800°C or higher.

### Clad Rolling

Clad rolling includes a hot-rolling step and an accelerated-cooling step. In the hot-rolling step according to the present invention, a slab heated to 1050°C to 1200°C is rolled such that the rolling reduction ratio achieved while the temperature of the surface of the resulting steel plate is 950°C or higher is 2.0 or more, the cumulative rolling reduction at 900°C or lower is 40% or more, and the rolling finish temperature is 750°C or higher. In the accelerated-cooling step according to the present invention, the cooling rate is set to 3 °C/s or more and the cooling stop temperature is set to 600°C or lower. Among the above conditions, the cumulative rolling reduction at 900°C or lower in the hot-rolling step, the rolling finish temperature in the hot-rolling step, and the conditions under which the accelerated-cooling step is conducted are determined on the basis of the knowledges that "a high rolling reduction achieved in the austenite low-temperature range and water-cooling performed immediately after rolling are effective for improving the strength of the base metal and the low-temperature toughness of the base metal, and, in particular, the property of stopping the propagation of brittle fracture of the base metal". The above conditions are described below. Hereinafter, the term "temperature" refers to the temperature of the surface of the steel plate.

As described above, the slab-heating temperature is set to 1050°C or higher and 1200°C or lower in the hot-rolling step. The slab-heating temperature is set to 1050°C or higher in order to perform the solution treatment of the cladding metal to a sufficient degree during heating and secure the sufficient rolling reduction ratio in the high-temperature range as described below. The slab-heating temperature is preferably high from the viewpoint of the bonding property of the clad steel. However, if the slab-heating temperature exceeds 1200°C, the hot ductility of the nickel-base alloy may be deteriorated, which results in cracking in the metal during rolling. If the slab-heating temperature exceeds 1200°C, the size of the crystal grains of the base metal may be increased, which deteriorates toughness. Accordingly, the slab-heating temperature is set to 1050°C or higher and 1200°C or lower from the viewpoints of corrosion resistance, low-temperature toughness, and the bonding property.

As described above, in the hot-rolling step, a rolling reduction ratio achieved while the temperature of the surface of the steel plate is 950°C or higher is 2.0 or more. Performing rolling in the high-temperature range secures the bonding property of the clad steel. Performing rolling in the high-temperature range is important because it reduces the difference in deformation resistance between the nickel-base alloy serving as a cladding metal and the low-alloy steel serving as a base metal and enables an ideal joint interface to be formed as a result of rolling and because interdiffusion of elements at the boundary between the cladding metal and base metal is easy to proceed in the high-temperature range. In particular, since a nickel-base alloy has higher deformation resistance than an austenitic stainless steel, a higher rolling reduction ratio needs to be achieved at high temperatures than in the production of an austenitic stainless-clad steel plate. Accordingly, the rolling reduction ratio (=(thickness of plate before rolling)/(thickness of plate after rolling)) achieved at 950°C or higher is suitably 2.0 or more in order to achieve sufficient metal junction at the interface between the cladding metal and the base metal in the stage of preparing a slab assembly for clad rolling such that the inside of the slab assembly is maintained under a high vacuum of 10⁻⁴ torr or more. A temperature range and a rolling reduction ratio preferable for securing the bonding property are 1000°C or higher and 2.5 or more, respectively. The upper limit of the rolling reduction ratio is not limited, but preferably 8 or less from the viewpoint of manufacturability. The term "rolling at 950°C or higher" commonly refers to rolling performed at 950°C or higher and 1100°C or lower.

As described above, in the hot-rolling step, a cumulative rolling reduction achieved at 900°C or lower is 40% or more, and the rolling finish temperature is 750°C or higher.

Performing rolling such that a cumulative rolling reduction achieved in the non-recrystallization range (900°C or lower) of austenite included in the base metal is 40% or more causes the austenite grains to extend and fine bainite to be formed by transformation in the following accelerated cooling step. This improves toughness. The cumulative rolling reduction is more preferably 50% or more in order to secure a further stable DWTT property.

If the rolling finish temperature is reduced to be less than 750°C, the diffusion of elements is suppressed and the bonding property may be deteriorated. In addition, the amount of carbide precipitated in the cladding metal may be increased, which deteriorates corrosion resistance. The rolling finish temperature is preferably 800°C or higher in order to secure a further stable bonding property.

As described above, in the accelerated-cooling step, the cooling rate is set to 3 °C/s or more and the cooling stop temperature is set to 600°C or lower.

Accelerated cooling is performed to 600°C or lower after rolling has been finished in order to produce a base metal having a high strength and a high low-temperature toughness. The cooling stop temperature is preferably 350°C or higher in order to reduce the strain caused in the rolled plate. The cooling rate significantly affects corrosion resistance. If the cooling rate is less than 3 °C/s, carbides may precipitate in the cladding metal in the cooling process performed immediately after rolling. This deteriorates corrosion resistance. The upper limit of the cooling rate is not limited and commonly 50 °C/s or less. The term "cooling rate" used herein refers to average cooling rate.

The air cooling step is a step in which air cooling is performed subsequent to the accelerated-cooling step. Cooling may be performed, for example, at a cooling rate of 10 to 30 °C/min.

A metal used as a base metal and a metal used as a cladding metal, which constitute the clad steel according to the present invention, have the above-described compositions and may be prepared by the ordinary method or the like. It is efficient to form a slab assembly for clad rolling, from a manufacturing viewpoint, such that a base metal, a cladding metal, a cladding metal, and a base metal are stacked on top of one another in this order. In consideration of warpage that may occur during cooling, it is desirable that the two base metals have the same thickness and the two cladding metals have the same thickness. It is needless to say that the form of the slab assembly is not limited to that described above.

### EXAMPLE 1

Slab assemblies were each formed using a base metal composed of low-alloy steel which was prepared by hot rolling and a cladding metal composed of Alloy625 in a sandwiched manner. The periphery of each slab assembly was welded by EBW (electron beam welding) in vacuum. Thus, clad slabs having a thickness of 300 mm were prepared. The slabs were heated and hot-rolled to a thickness of 50 mm in a group of two slabs stacked on each other. Thus, clad steel plates having a thickness of 25 mm (low-alloy steel: 22 mm, Alloy625: 3 mm) were prepared. Table 1 shows the compositions of the base metals used. Table 2 shows the composition of the cladding metal used: Alloy625. Table 3 shows the production conditions.

The average grain size of the bainite microstructure included in each base metal was determined by identifying each crystal grain as a single grain when the difference in crystallographic orientation measured by EBSD was 15° or more and taking the area-weighted average of the sizes of the single grains.

The mechanical properties of each base metal were evaluated by subjecting a tensile test specimen and a DWTT test specimen conforming to API-5L Specification (API: American Petroleum Institute), which were taken from the base metal, to a tensile test and a DWTT test, respectively. In the DWTT test, the test temperature was set to -25°C, and test specimens having a shear fracture percentage of 85% or more were evaluated as a test specimen of base metals having excellent low-temperature toughness.

The test of the corrosion resistance of the cladding metal was conducted in accordance with Method of 65 Per Cent Nitric Acid Test for Stainless Steels (Huey test) described in JIS G0573. In this test method, a test specimen was immersed in a boiling 65%-nitric acid solution for 48 hours. The corrosion rate (g/(m²·h)) was calculated from a change in the weight of the test specimen during the test. The test specimen was again immersed in another boiling 65%-nitric acid solution. This 48-hour immersion test was repeated 5 times. The corrosion resistance was evaluated on the basis of the average of the corrosion rates measured in the five tests. Test specimens having an average corrosion rate of 0.75 g/(m²·h) or less were evaluated to have good corrosion resistance.

The bonding property of the clad steel was evaluated in accordance with the shear strength test described in Testing methods for Clad Steels described in JIS G0601:2012. Test specimens having shear strength (shear stress) of 300 MPa or more were evaluated to have a good bonding property.

Table 4 shows the overall evaluation of the test results.

### [Table 1]

**Table 1**

| Steel No. | Chemical composition (unit: mass%) | | | | | | | | | | | | | | | Remark |
|---|---|---|---|---|---|---|---|---|---|---|---|---|---|---|---|---|
| | C | Si | Mn | P | S | Cu | Ni | Cr | Mo | V | Nb | Ti | N | Al | Ca | |
| A1 | 0.060 | 0.30 | 1.70 | 0.009 | 0.0008 | | | | | | 0.075 | 0.012 | 0.0040 | 0.035 | | Invention example |
| A2 | 0.048 | 0.28 | 1.71 | 0.008 | 0.0008 | | | | 0.13 | 0.05 | 0.072 | 0.011 | 0.0043 | 0.033 | | Invention example |
| A3 | 0.043 | 0.15 | 1.63 | 0.007 | 0.0005 | 0.24 | 0.23 | | 0.13 | | 0.078 | 0.014 | 0.0043 | 0.032 | 0.0019 | Invention example |
| A4 | 0.042 | 0.30 | 1.30 | 0.003 | 0.0003 | 0.25 | 0.25 | 0.23 | 0.08 | | 0.075 | 0.014 | 0.0040 | 0.035 | 0.0020 | Invention example |
| A5 | 0.046 | 0.13 | 1.58 | 0.005 | 0.0006 | 0.28 | 0.25 | | 0.13 | | 0.055 | 0.013 | 0.0048 | 0.036 | | Invention example |
| A6 | 0.045 | 0.16 | 1.65 | 0.006 | 0.0005 | 0.27 | 0.20 | | 0.11 | | 0.093 | 0.015 | 0.0038 | 0.028 | | Invention example |
| B1 | 0.041 | 0.29 | 1.57 | 0.008 | 0.0006 | 0.24 | 0.23 | 0.07 | 0.19 | | 0.039 | 0.013 | 0.0041 | 0.031 | 0.0027 | Comparative example |
| B2 | 0.050 | 0.22 | 1.65 | 0.007 | 0.0008 | 0.30 | 0.35 | | | | 0.120 | 0.012 | 0.0039 | 0.030 | | Comparative example |

| | | | | | | | | | | | | | | | | |
|---|---|---|---|---|---|---|---|---|---|---|---|---|---|---|---|---|
| Note: Underlined items are outside the range of the present invention | | | | | | | | | | | | | | | | |

### [Table 2]

**Table 2**

| | Chemical composition (unit: mass%) | | | | | | | | | | | | |
|---|---|---|---|---|---|---|---|---|---|---|---|---|---|
| | C | Si | Mn | P | S | Cu | Cr | Mo | Fe | Al | Ti | Nb+Ta | Ni |
| Alloy 625 | 0.010 | 0.13 | 0.07 | 0.003 | 0.0003 | - | 21.9 | 9.0 | 3.2 | 0.19 | 0.30 | 3.79 | Balance |
| Alloy 825 | 0.008 | 0.19 | 0.21 | 0.013 | 0.0008 | 2.2 | 21.6 | 3.0 | 28.0 | 0.11 | 0.83 | - | Balance |

### [Table 3]

**Table 3**

| Production method No. | Base-metal rolling | Clad rolling | | | | | | |
|---|---|---|---|---|---|---|---|---|
| | Heating temperature (°C) | Heating temperature (°C | Reduction ratio at 950°C or higher | Cumulative reduction at 900°C or lower (%) | Rolling finish temperature (°C) | Cooling rate (°C/sec) | Cooling stop temperature (°C) | Remark |
| E1 | 1080 | 1150 | 2.5 | 50 | 850 | 5 | 500 | Invention example |
| E2 | 1020 | 1150 | 2.5 | 50 | 850 | 5 | 500 | Invention example |
| E3 | 1080 | 1100 | 2.5 | 50 | 850 | 5 | 500 | Invention example |
| E4 | 1080 | 1050 | 2.5 | 50 | 850 | 5 | 500 | Invention example |
| E5 | 1080 | 1150 | 2.0 | 50 | 850 | 5 | 500 | Invention example |
| E6 | 1080 | 1150 | 2.5 | 65 | 850 | 5 | 500 | Invention example |
| E7 | 1080 | 1150 | 2.5 | 50 | 780 | 5 | 500 | Invention example |
| E8 | 1080 | 1150 | 2.5 | 50 | 850 | 3 | 500 | Invention example |
| E9 | 1080 | 1150 | 2.5 | 50 | 850 | 5 | 550 | Invention example |
| E10 | 1080 | 1150 | 2.5 | 50 | 850 | 5 | 350 | Invention example |
| F1 | 1150 | 1150 | 2.5 | 50 | 850 | 5 | 500 | Comparative example |
| F2 | 1080 | 1000 | 1.8 | 50 | 850 | 5 | 500 | Comparative example |
| F3 | 1080 | 1150 | 1.8 | 50 | 850 | 5 | 500 | Comparative example |
| F4 | 1080 | 1150 | 2.5 | 35 | 850 | 5 | 500 | Comparative example |
| F5 | 1080 | 1150 | 2.5 | 50 | 700 | 5 | 500 | Comparative example |
| F6 | 1080 | 1150 | 2.5 | 50 | 850 | 0.5 (Only air cooling) | - | Comparative example |

| | | | | | | | | |
|---|---|---|---|---|---|---|---|---|
| Note: Underlined items are outside the range of the invention according to Claim 4 | | | | | | | | |

### [Table 4]

**Table 4**

| Example No. | Base metal No. (Table 1) | Cladding metal (Table 2) | Production condition (Table 3) | Tensile property of base metal | | Drop weight tear test-property of base metal | Average grain size (µm) | Shearing stress (MPa) | Reduction in amount of cladding metal by corrosion (corrosion rate) (g/(m²·h)) | Remark |
|---|---|---|---|---|---|---|---|---|---|---|
| | | | | YS (MPa) | TS (MPa) | DWTT -25°CSATT (%) | | | | |
| 1 | A1 | Alloy625 | E1 | 425 | 542 | 100 | 22 | 388 | 0.48 | Invention example |
| 2 | A2 | Alloy625 | E1 | 465 | 578 | 100 | 24 | 421 | 0.47 | Invention example |
| 3 | A3 | Alloy625 | E1 | 495 | 595 | 100 | 25 | 420 | 0.45 | Invention example |
| 4 | A4 | Alloy625 | E1 | 431 | 552 | 100 | 26 | 397 | 0.52 | Invention example |
| 5 | A5 | Alloy625 | E1 | 444 | 559 | 100 | 28 | 384 | 0.47 | Invention example |
| 6 | A6 | Alloy625 | E1 | 523 | 616 | 100 | 25 | 378 | 0.45 | Invention example |
| 7 | A3 | Alloy625 | E2 | 482 | 583 | 100 | 28 | 401 | 0.55 | Invention example |
| 8 | A3 | Alloy625 | E3 | 467 | 575 | 100 | 21 | 427 | 0.46 | Invention example |
| 9 | A3 | Alloy625 | E4 | 451 | 564 | 100 | 25 | 368 | 0.52 | Invention example |
| 10 | A3 | Alloy625 | E5 | 507 | 600 | 100 | 25 | 395 | 0.47 | Invention example |
| 11 | A3 | Alloy625 | E6 | 515 | 605 | 100 | 26 | 377 | 0.58 | Invention example |
| 12 | A3 | Alloy625 | E7 | 524 | 614 | 100 | 27 | 384 | 0.62 | Invention example |
| 13 | A3 | Alloy625 | E8 | 482 | 580 | 100 | 27 | 395 | 0.52 | Invention example |
| 14 | A3 | Alloy625 | E9 | 568 | 575 | 100 | 28 | 404 | 0.50 | Invention example |
| 15 | A3 | Alloy625 | E10 | 543 | 627 | 100 | 28 | 410 | 0.46 | Invention example |
| 16 | B1 | Alloy625 | E1 | 499 | 625 | 60 | 55 | 410 | 0.58 | Comparative example |
| 17 | B2 | Alloy625 | E1 | 524 | 639 | 70 | 24 | 415 | 0.53 | Comparative example |
| 18 | A3 | Alloy625 | F1 | 490 | 590 | 80 | 60 | 424 | 0.47 | Comparative example |
| 19 | A3 | Alloy625 | F2 | 447 | 568 | 100 | 24 | 175 | 0.70 | Comparative example |
| 20 | A3 | Alloy625 | F3 | 485 | 590 | 100 | 25 | 188 | 0.57 | Comparative example |
| 21 | A3 | Alloy625 | F4 | 456 | 578 | 60 | 57 | 404 | 0.56 | Comparative example |
| 22 | A3 | Alloy625 | F5 | 505 | 618 | 100 | 25 | 162 | 0.92 | Comparative example |
| 23 | A3 | Alloy625 | F6 | 423 | 531 | 80 | 60 | 384 | 0.76 | Comparative example |

| | | | | | | | | | | |
|---|---|---|---|---|---|---|---|---|---|---|
| Note: The compositions or average grain diameters of underlined items are outside the range of the present invention, or the production conditions of the underlined items are outside the range of Claim 4 | | | | | | | | | | |

Table 1 shows the compositions of the base metals used. Steel Nos. A1 to A6 are Invention examples, which are within the range of the present invention. Steel Nos. B1 and B2 are Comparative examples, in which the Nb content was outside the range of the present invention. The cladding metal used was Alloy625 having the composition shown in Table 2. Table 3 shows the conditions under which each of the clad steel plates was prepared by using the specific one of the base metals having the compositions shown in Table 1 and Alloy625 having the composition shown in Table 2. Production method Nos. E1 to E10 are Invention examples, in which all of the production conditions, that is, the heating conditions, the rolling conditions, and the cooling conditions, were within the range of the present invention. Production method Nos. F1 to F6 are Comparative examples, in which any of the production conditions, that is, the heating conditions, the rolling conditions, and the cooling conditions, was outside the range of the present invention.

Table 4 shows the results of the tests of various clad steels prepared. Specifically, Table 4 shows the results of the tensile test and the drop weight tear test of the base metal, the average crystal grain size, the results of the shearing test, and the results of the corrosion test of the cladding metal. Example Nos. 1 to 15 are Invention examples in which the desired value was achieved in all of the tests. The shear fracture percentage was 85% or more in all of the Invention examples. This confirms that a shear fracture percentage of 85% or more may stably be achieved. In Comparative example Nos. 16 and 17, in which the chemical composition of the base metal was outside the range of the present invention, and in Comparative example Nos. 18 to 23, in which any of the production conditions was outside the range of the present invention, some of the test results did not reach the desired value.

### EXAMPLE 2

Slab assemblies were each formed using a base metal composed of low-alloy steel which was prepared by hot rolling and a cladding metal composed of Alloy825 in a sandwiched manner. The periphery of each slab assembly was welded by EBW (electron beam welding) in vacuum. Thus, clad slabs having a thickness of 300 mm were prepared. The slabs were heated and hot-rolled to a thickness of 50 mm in a group of two slabs stacked on each other. Thus, clad steel plates having a thickness of 25 mm (low-alloy steel: 22 mm, Alloy825: 3 mm) were prepared. Table 1 shows the compositions of the base metals used. Table 2 shows the composition of the cladding metal used: Alloy825. Table 3 shows the production conditions.

The content of the precipitated Nb in each base metal was determined in the following manner. The base metal was subjected to electrolysis in a 10%-AA electrolytic solution (10% acetylacetone-1% tetramethylammonium chloride-methyl alcohol electrolytic solution). The resulting extraction residue was analyzed by inductively-coupled plasma atomic emission spectrometry in order to determine the amount of Nb included in the extraction residue. Thus, the amount of Nb in the form of a precipitate was calculated. The average grain size of the bainite microstructure included in the base metal was measured as in Example 1. The tensile test and the DWTT test were conducted as in Example 1. The test of the corrosion resistance of the cladding metal and the test of the bonding property of the clad steel were also conducted as in Example 1, although the results of these tests were not shown in Table 5. Good results were confirmed in all of Invention examples and Comparative examples shown in Table 5.

Table 5 shows the results of the tests of each clad steel. Specifically, Table 5 shows the results of the tensile test and the drop weight tear test of the base metal, the content of the precipitated Nb, and the average crystal grain size. Example Nos. 24 to 29 are Invention examples in which the desired value was achieved in all of the tests. In Example Nos. 30 and 31, in which the chemical composition of the base metal was outside the range of the present invention, and in Comparative example No. 32, in which the heating temperature of base-metal rolling was outside the range of the present invention, the appropriate amount of precipitated Nb failed to be formed and the DWTT property did not reach the desired value.

### [Table 5]

**Table 5**

| Example No. | Base metal No. (Table 1) | Cladding metal (Table 2) | Production condition (Table 3) | Tensile property of base metal | | Drop weight tear test-property of base metal | Amount of Nb precipitated (wt%) | Average grain size (µm) | Remark |
|---|---|---|---|---|---|---|---|---|---|
| | | | | YS (MPa) | TS (MPa) | DWTT -25°CSATT (%) | | | |
| 24 | A3 | Alloy825 | E1 | 492 | 592 | 100 | 0.049 | 25 | Invention example |
| 25 | A5 | Alloy825 | E1 | 446 | 563 | 100 | 0.043 | 27 | Invention example |
| 26 | A6 | Alloy825 | E1 | 521 | 615 | 100 | 0.062 | 27 | Invention example |
| 27 | A3 | Alloy825 | E2 | 490 | 585 | 100 | 0.058 | 27 | Invention example |
| 28 | A3 | Alloy825 | E3 | 471 | 571 | 100 | 0.052 | 22 | Invention example |
| 29 | A3 | Alloy825 | E4 | 445 | 555 | 100 | 0.055 | 25 | Invention example |
| 30 | B1 | Alloy825 | E1 | 495 | 627 | 65 | 0.030 | 55 | Comparative example |
| 31 | B2 | Alloy825 | E1 | 525 | 635 | 70 | 0.084 | 24 | Comparative example |
| 32 | A3 | Alloy825 | F1 | 497 | 591 | 75 | 0.036 | 60 | Comparative example |

| | | | | | | | | | |
|---|---|---|---|---|---|---|---|---|---|
| Note: The compositions of underlined items are outside the range of the present invention, or the production conditions of the underlined items are outside the range of Claim 4 | | | | | | | | | |

## Claims

1. A nickel-base alloy-clad steel plate comprising:
a cladding metal including a nickel-base alloy; and
a base metal including a low-alloy steel, the base metal containing, by mass,
C: 0.020% to 0.10%, Si: 0.10% to 0.50%,
Mn: 0.75% to 1.80%, P: 0.015% or less,
S: 0.0030% or less, Nb: 0.040% to 0.10%,
Ti: 0.005% to 0.030%, N: 0.0010% to 0.0060%, and
A1: 0.070% or less,
wherein the base metal further contains optionally one or more elements selected from, by mass,
Cu: 0.50% or less, Ni: 0.50% or less,
Cr: 0.50% or less, Mo: 0.50% or less,
V: 0.1% or less, and Ca: 0.0010% to 0.0050%,
with the balance being Fe and inevitable impurities, wherein the base metal includes a bainite microstructure having an average grain size of 30 µm or less, wherein the grain size is measured by electron back-scattering diffraction.

2. The nickel-base alloy-clad steel plate according to Claim 1, wherein the content of precipitated Nb in the base metal is 0.040% to 0.070% by mass, as determined by inductive-coupled plasma atomic emission spectrometry.

3. The nickel-base alloy-clad steel plate according to Claim 1 or 2, wherein the base metal further contains one or more elements selected from, by mass,
Cu: 0.50% or less, Ni: 0.50% or less,
Cr: 0.50% or less, Mo: 0.50% or less,
V: 0.1% or less, and Ca: 0.0010% to 0.0050%.

4. A method for producing the nickel-base alloy-clad steel plate according to any one of Claims 1 to 3,
the method comprising steps of:
performing base-metal rolling in which a slab-heating temperature is 1000°C to 1100°C, the base-metal rolling being performed prior to clad rolling; and
performing clad rolling, the clad rolling including:
a hot-rolling step in which a slab heated to 1050°C to 1200°C is hot-rolled such that a rolling reduction ratio achieved while the temperature of a surface of the resulting steel plate is 950°C or higher is 2.0 or more;
a cumulative rolling reduction achieved while the temperature of the surface of the steel plate is 900°C or lower is 40% or more, and a rolling finish temperature is 750°C or higher in terms of the temperature of the surface of the steel plate;
an accelerated-cooling step in which accelerated cooling is performed at a cooling rate of 3 °C/s or more and a cooling stop temperature of 600°C or lower subsequent to the hot-rolling step; and
an air-cooling step in which air cooling is performed subsequent to the accelerated-cooling step.

## Patentansprüche

1. Mit Nickelbasislegierung plattiertes Stahlblech, umfassend:
ein Plattiermetall, das eine Nickelbasislegierung umfasst; und
ein Basismetall, das einen niedriglegierten Stahl umfasst, wobei das Basismetall nach Masse enthält:
C: 0,020% bis 0,10%, Si: 0,10% bis 0,50%,
Mn: 0,75% bis 1,80%, P: 0,015% oder weniger,
S: 0,0030% oder weniger, Nb: 0,040% bis 0,10%,
Ti: 0,005% bis 0,030%, N: 0,0010% bis 0,0060% und
Al: 0,070% oder weniger,
wobei das Basismetall außerdem optional ein oder mehrere Elemente enthält, ausgewählt aus, nach Masse:
Cu: 0,50% oder weniger, Ni: 0,50% oder weniger,
Cr: 0,50% oder weniger, Mo: 0,50% oder weniger,
V: 0,1% oder weniger und Ca: 0,0010% bis 0,0050%,
wobei der Rest Fe und unvermeidbare Unreinheiten sind,
wobei das Basismetall eine Bainit-Mikrostruktur mit einer mittleren Korngröße von 30 µm oder weniger umfasst, wobei die Korngröße mittels Elektronenrückstreubeugung gemessen wird.

2. Mit Nickelbasislegierung plattiertes Stahlblech gemäß Anspruch 1, wobei der Gehalt an ausgefälltem Nb in dem Basismetall 0,040 Masse-% bis 0,070 Masse-% ist, wie mittels Atomemissionsspektrometrie mit induktiv gekoppeltem Plasma bestimmt.

3. Mit Nickelbasislegierung plattiertes Stahlblech gemäß Anspruch 1 oder 2, wobei das Basismetall außerdem ein oder mehrere Elemente enthält, ausgewählt aus, nach Masse:
Cu: 0,50% oder weniger, Ni: 0,50% oder weniger,
Cr: 0,50% oder weniger, Mo: 0,50% oder weniger,
V: 0,1% oder weniger und Ca: 0,0010% bis 0,0050%.

4. Verfahren zur Herstellung des mit Nickelbasislegierung plattierten Stahlblechs gemäß einem der Ansprüche 1 bis 3,
wobei das Verfahren die folgenden Schritte umfasst:
Durchführen einer Basismetallwalzung, wobei eine Brammenerhitzungstemperatur 1000°C bis 1100°C beträgt, wobei die Basismetallwalzung vor der Plattierwalzung durchgeführt wird; und
Durchführen der Plattierwalzung, wobei die Plattierwalzung umfasst:
einen Warmwalzungsschritt, wobei eine auf 1050°C bis 1200°C erhitzte Bramme warmgewalzt wird, so dass ein erzieltes Walzreduktionsverhältnis, während die Temperatur einer Oberfläche des resultierenden Stahlblechs 950°C oder höher ist, 2,0 oder mehr beträgt;
eine erzielte kumulative Walzreduktion, während die Temperatur der Oberfläche des Stahlblechs 900°C oder weniger ist, 40% oder mehr beträgt, und eine Walzendtemperatur 750°C oder höher in Bezug auf die Temperatur der Oberfläche des Stahlblechs ist;
ein Beschleunigungskühlungsschritt, wobei die Beschleunigungskühlung bei einer Kühlrate von 3°C/s oder mehr und einer Kühlungsstopptemperatur von 600°C oder weniger nach dem Warmwalzschritt vorgenommen wird; und
ein Luftkühlungsschritt, wobei die Luftkühlung nach dem Beschleunigungskühlungsschritt vorgenommen wird.

## Revendications

1. Tôle d'acier plaquée d'alliage à base de nickel comprenant :
un métal de placage comprenant un alliage à base de nickel ; et
un métal de base comprenant un acier faiblement allié, le métal commun contenant, en masse,
C : 0,020 % à 0,10 %, Si : 0,10% à 0,50%,
Mn : 0,75 % à 1,80 %, P : 0,015% ou moins,
S : 0,0030 % ou moins, Nb : 0,040% à 0,10%,
Ti : 0,005 % à 0,030 %, N : 0,0010 % à 0,0060 %, et
Al : 0,070 % ou moins,
dans laquelle le métal de base contient en outre facultativement un ou plusieurs éléments choisis parmi, en masse,
Cu : 0,50 % ou moins, Ni : 0,50% ou moins,
Cr : 0,50 % ou moins, Mo : 0,50% ou moins,
V : 0,1 % ou moins, et Ca : 0,0010 % à 0,0050 %,
le reste étant du Fe et des impuretés inévitables, dans laquelle le métal de base comprend une microstructure de bainite ayant une taille de grain moyenne de 30 µm ou moins, dans laquelle la taille de grain est mesurée par diffraction à rétrodiffusion d'électrons.

2. Tôle d'acier plaquée d'alliage à base de nickel selon la revendication 1, dans laquelle la teneur de Nb précipité dans le métal de base est de 0,040 % à 0,070 % en masse, telle que déterminée par spectrométrie d'émission atomique à plasma couplé par induction.

3. Tôle d'acier plaquée d'alliage à base de nickel selon la revendication 1 ou 2, dans laquelle le métal de base contient en outre un ou plusieurs éléments choisis parmi, en masse,
Cu : 0,50 % ou moins, Ni : 0,50% ou moins,
Cr : 0,50 % ou moins, Mo : 0,50% ou moins,
V : 0,1 % ou moins, et Ca : 0,0010 % à 0,0050 %,

4. Procédé de production de la tôle d'acier plaquée d'alliage à base de nickel selon l'une quelconque des revendications 1 à 3, le procédé comprenant les étapes consistant à :
effectuer un laminage de métal de base dans lequel une température de chauffage de brame est de 1000°C à 1100°C, le laminage de métal de base étant effectué avant le laminage de placage ; et
effectuer un laminage de placage, le laminage de placage comprenant :
une étape de laminage à chaud dans laquelle une brame chauffée entre 1050°C et 1200°C est laminée à chaud de sorte qu'un taux de réduction de laminage atteint alors que la température d'une surface de la tôle d'acier résultante est de 950°C ou plus est de 2,0 ou plus ;
une réduction de laminage cumulée obtenue alors que la température de la surface de la tôle d'acier est de 900°C ou moins est de 40 % ou plus, et une température de finition de laminage est de 750°C ou plus en termes de température de la surface de la tôle d'acier ;
une étape de refroidissement accéléré dans laquelle un refroidissement accéléré est effectué à une vitesse de refroidissement de 3°C/ s ou plus et à une température d'arrêt de refroidissement de 600°C ou moins après l'étape de laminage à chaud ; et
une étape de refroidissement par air dans laquelle un refroidissement par air est effectué après l'étape de refroidissement accéléré.
